# EUROPÄISCHE PATENTANMELDUNG

(11) **EP 1 440 737 A1**
(43) Veröffentlichungstag der Anmeldung: **28.07.2004**
(21) Anmeldenummer: 03405027.8
(22) Anmeldetag: 24.01.2003
(51) Int. Cl.: B05C 17/005, B65D 81/32

(54) **Austraganordnung mit einem Austraggerät für mindestens zwei Komponenten**

(71) Anmelder: Mixpac Systems AG, 6343 Rotkreuz (CH)
(72) Erfinder: Keller, Wilhelm A., 6402 Merlischachen (CH)
(74) Vertreter: Seehof, Michel

(57) **Zusammenfassung**

Die Austraganordnung enthält eine Kartusche für mindestens zwei Komponenten und einem Mischer, wobei die Kartusche einerseits und der Mischer andererseits zueinander komplementäre Mittel aufweisen, um den Mischer eindeutig gerichtet auf die Kartusche aufzusetzen. Als Ausrichtmittel dienen vereinzelte, zylindrische und voneinander beabstandete Auslässe (13, 14) mit voneinander verschiedenen Querschnittsflächen an der Kartusche und korrespondierende vereinzelte, zylindrische und voneinander beabstandete Einlässe (6, 7) am Mischer (1). Der Mischer (1) ist mittels einer Überwurfmutter (18) mit Gewinde (19) an der Kartusche befestigbar.

Durch die Verwendung einer Überwurfmutter mit Gewinde kann in Bezug auf die Lösung mit Bajonett-Verschlussmitteln eine gute Abdichtung erzielt werden und es werden Kosten für ein weiteres Teil und dessen Montage gespart.

## Beschreibung

Die vorliegende Erfindung bezieht sich auf eine Austraganordnung mit einem Austraggerät oder Kartusche für mindestens zwei Komponenten und einen Mischer oder Zubehörteil gemäss Oberbegriff von Patentanspruch 1.

Eine solche Anordnung ist aus der EP-B-1-730 913 des gleichen Anmelders bekannt. Der dort enthaltene Erfindungsgedanke ist im wesentlichen darauf ausgerichtet, das allgemeine Prinzip des codierten, sprich gerichteten Aufsetzens und Befestigen eines Mischers oder Zubehörteils auf eine Kartusche oder Austraggerät zu entwickeln, wobei die Befestigungsmittel einen Bajonettverschluss beinhalten. Die primären Ausrichtmittel sind an den beiden Bajonett-Verschlussteilen angebracht, so dass die Bajonett-Verschlussmittel am Mischer oder am Zubehörteil zuerst bezüglich der übrigen Bajonett-Verschlussmittel ausgerichtet werden müssen, um dann gerichtet aufgesetzt und dann verbunden, bzw. befestigt zu werden.

Die Austraggeräte und Mischer mit Bajonett-Verschlüssen gemäss der eingangs erwähnten EP-B-1-730 913 haben sich auf dem Markt bewährt, doch hat es sich herausgestellt, dass bei grösseren Austraggeräten und Mischern, die einen höheren Austragdruck sowie eine Überwindung eines grösseren Reibungswiderstandes beim Aufeinanderstecken erfordern, ein Bajonettverschluss, der im Prinzip nur eine Vierteldrehung gestattet, die erforderliche Dichtheit der Verbindung nicht mehr in allen Fällen gewährleistet.

In der eingangs erwähnten Patentschrift sind noch weitere Codierungsmittel wie Nasen, Stifte, Vorsprünge oder dergl. und entsprechende Schlitze und Vertiefungen angegeben, sowie Auslässe beim Austraggerät und Einlässe beim Mischer oder Zubehörteil, die unterschiedliche Grössen aufweisen können.

In der EP-A-0 600 138 des gleichen Anmelders ist ein Verfahren und Anordnung zum gerichteten Befestigen eines Mischers an einer Kartusche offenbart, wobei am Kartuschenauslass sowie am Mischereinlass komplementäre Mittel zum Ausrichten des Mischers auf das Austraggerät vorhanden sind und der Mischer mittels einer Überwurfmutter an das Gerät befestigbar ist. Dabei handelt es sich nicht um getrennte, zylindrische und voneinander beabstandete Ausund Einlässe.

Es ist von diesem bekannten Stand der Technik ausgehend Aufgabe der vorliegenden Erfindung, eine Austraganordnung anzugeben, die bei einem gerichteten Aufsetzen des Mischers oder Zubehörteils auf die Kartusche oder Austraggerät ein sicheres Abdichten des Mischers oder Zubehörteils gegenüber der Kartusche oder Austraggerät auch bei hohen Drücken und Reibungswiderständen beim Aufstecken, sowie eine wesentliche Vereinfachung gegenüber der Ausführung mit dem Bajonett-Verschluss gewährleistet. Diese Aufgabe wird mit der Anordnung gemäss Patentanspruch 1 gelöst.

Die Erfindung wird im Folgenden anhand von Zeichnungen von Ausführungsbeispielen näher erläutert.
- Fig. 1: zeigt einen Längsschnitt eines Mischers,
- Fig. 2: zeigt das Einlassende des Mischers von Fig. 1,
- Fig. 3: zeigt einen Schnitt eines Kartuschen-Auslassendes,
- Fig. 4: ist eine Draufsicht auf die Kartusche von Fig. 3,
- Fig. 5: zeigt im Schnitt eine Überwurfmutter mit Gewinde,
- Fig. 6: zeigt im Schnitt einen Zusammenbau des Mischers gemäss Fig. 1 mit der Kartusche gemäss Fig. 3,
- Fig. 7: zeigt eine Sicht auf das Stopfenende einer Verschlusskappe,
- Fig. 8: zeigt die Verschlusskappe in Seitenansicht, und
- Fig. 9: zeigt die Verschlusskappe von Fig. 8 in Draufsicht.

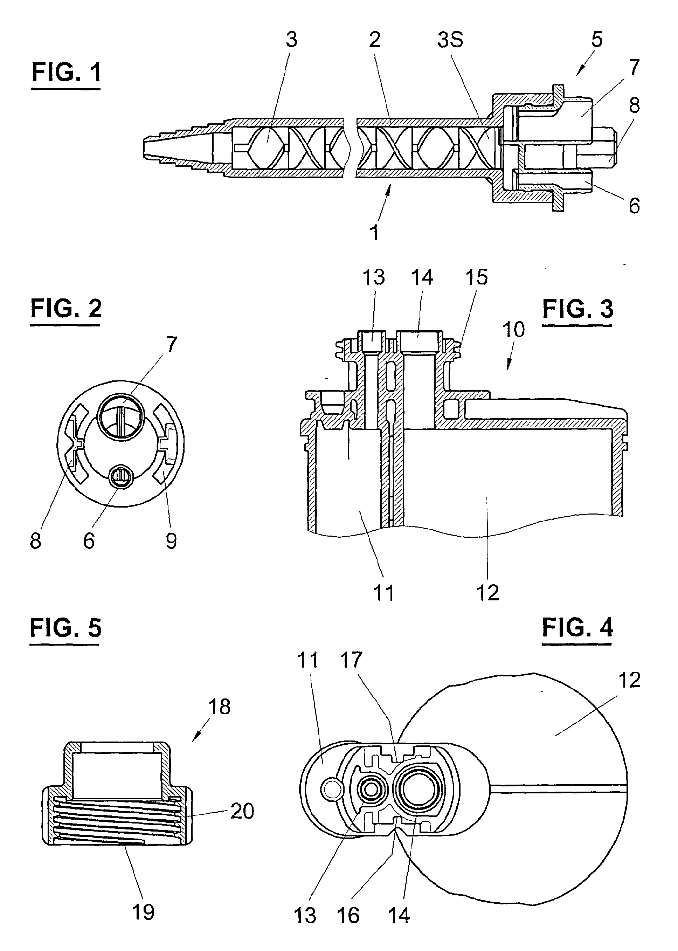

Fig. 1 zeigt einen Mischer 1 mit einem Mischergehäuse 2, einer Mischwendelgruppe 3, dem Mischerauslass 4 und einem Mischereinlassbereich 5 mit zwei getrennten Einlassteilen 6 und 7, welche einstückig mit einem korrekt ausgerichteten Trennelement 3S der Mischwendelgruppe ausgebildet sind.

Die Querschnittsflächen der beiden Einlässe 6 und 7 sind voneinander verschieden, mit einem Unterschied von einigen Prozent bis zu einem Verhältnis von 1 : 10. Der Mischer-Einlassbereich 5 weist ferner zwei Codierleisten 8 und 9 auf, siehe Fig. 2, um die Ausrichtwirkung der Einlässe mit verschiedener Querschnittsfläche zu verstärken. Dabei sind die beiden Codierleisten voneinander verschieden, um eine visuelle Ausrichtung zu erleichtern.

Die Kartusche 10 weist zwei zylindrische Behälter 11 und 12 auf, die in vorliegendem Ausführungsbeispiel eine unterschiedliche Querschnittsfläche aufweisen. Die zwei zylindrischen Behälter können jedoch dieselbe Querschnittsfläche aufweisen. Die beiden Behälter münden in zwei eigene, getrennte, zylindrische und voneinander beabstandete Auslässe 13 und 14, und der Innendurchmesser der Auslässe entspricht dem Aussendurchmesser der Mischer-Einlässe 6 und 7. Dadurch ergibt sich eine dichte Verbindung der Auslässe mit den Einlässen.

Eine umgekehrte Anordnung, bei der die Einlässe des Mischers über die Auslässe der Kartusche greifen, ist ebenfalls denkbar, wobei die Ein- und Auslässe aneinander derart angepasst sind, dass beim Ineinanderstecken auch in diesem Fall eine dichte Verbindung entsteht.

Am oberen Ende der Auslässe befindet sich ein Gewindeteil 15 zur Aufnahme der Überwurfmutter 18. Wie aus Fig. 4 hervorgeht, weist der mit Gewinde 15 versehene Flansch der Kartusche Einschnitte 16 und 17 auf, deren Profil dem Profil der Codierleisten 8 und 9 entspricht.

In Fig. 5 ist eine Überwurfmutter 18 im Schnitt dargestellt, die ein Gewinde 19 aufweist, das dem Gewinde 15 der Kartusche entspricht, sowie Rippen 20 zur besseren Handhabung. Zum Befestigen des Mischers an der Kartusche wird die Überwurfmutter auf den Mischer aufgebracht und angezogen. Durch die Verwendung einer Überwurfmutter mit Gewinde ist es möglich, genügend grosse Kräfte aufzubringen, so dass die Mischereinlässe in die Kartuschenauslässe, oder umgekehrt, hineingepresst werden, wodurch ein gutes Abdichten gewährleistet ist.

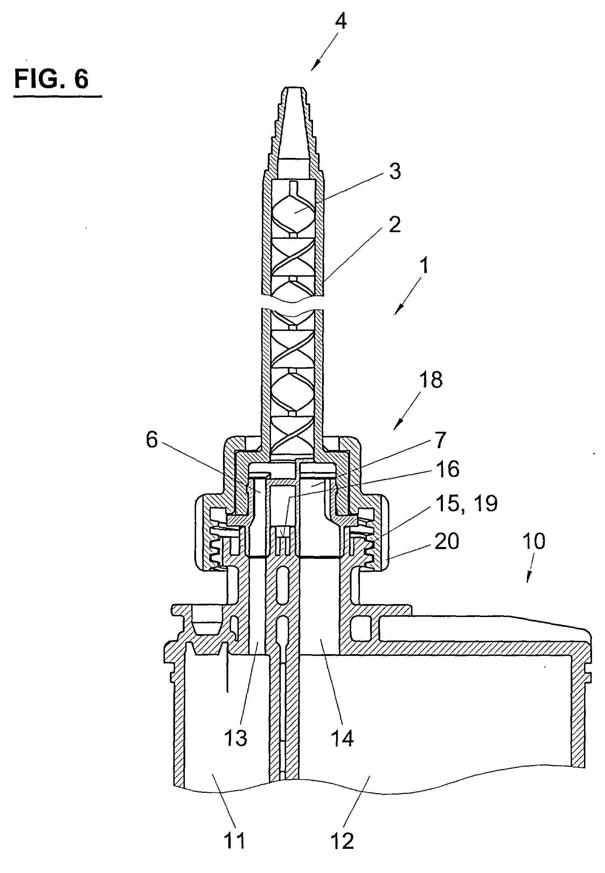

In Fig. 6 ist der auf der Kartusche 10 aufgesteckte und mittels der Überwurfmutter 18 gesicherte Mischer 1 dargestellt.

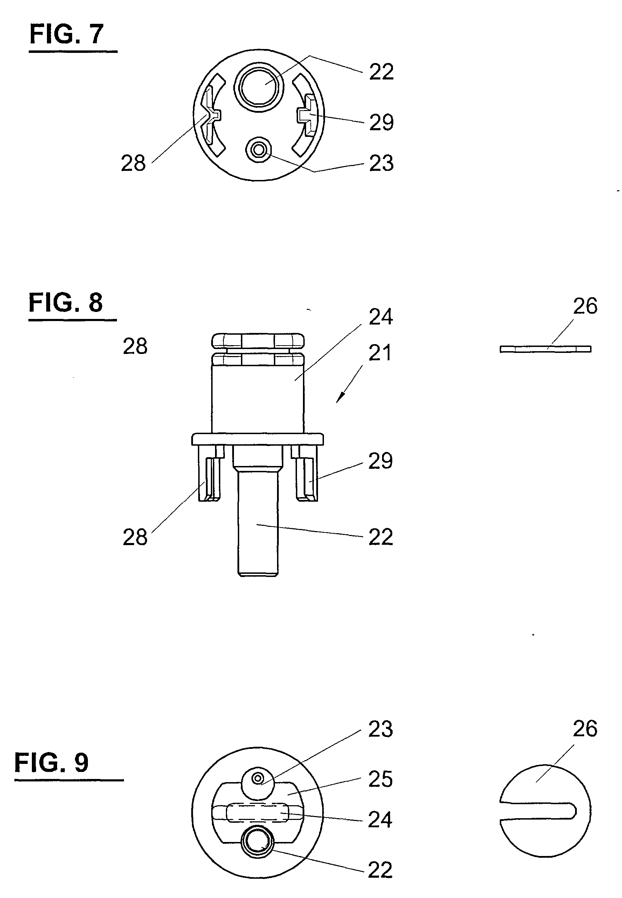

In den Fig. 7, 8 und 9 ist eine Verschlusskappe 21 dargestellt, die zwei Stopfen 22 und 23 aufweist, die in die Kartuschenauslässe 13 und 14 passen. Die der Kartusche zugewandte Fläche weist im vorliegenden Fall dieselben Codierleisten 8 und 9 auf, die in die Ausnehmungen 16 und 17 an der Kartusche passen.

Die Verschlusskappe wird mit derselben Überwurfmutter 18 an der Kartusche befestigt wie der Mischer 1. Dadurch kann im Gegensatz zur Ausführung mit dem Bajonettverschluss, dessen Verschlussring bezüglich dem Mischer, bzw. dessen Bajonett-Verschlussteilen, ausgerichtet sein muss und daher nicht für die Kappe verwendbar ist, nicht nur ein Teil, sondern auch die zum Aufstecken und Ausrichten auf den Mischer benötigte Zeit eingespart werden.

Zweckmässigerweise ist die Verschlusskappe mit Abzugmitteln versehen, die einen an einem Steg 24 oben angebrachten Doppelflansch 25 enthalten, in den, nach dem Befestigen mit der Überwurfmutter, eine Abzugscheibe 26 eingeführt werden kann. Beim Abnehmen der Kappe, bzw. Herausdrehen der Überwurfmutter wird der Stopfen anhand dieser Abziehscheibe herausgezogen.

Es sind eine ganze Anzahl von weiteren Sekundär-Codiermitteln, bzw. -codierleisten denkbar, wie sie in der eingangs erwähnten europäischen Patentschrift beschrieben sind, z.B. als Erhebungen und Einlässe, Vertiefungen und andere komplementär zueinander geformte Richtmittel, die auch hier Anwendung finden können.

## Patentansprüche

1. Austraganordnung mit einem Austraggerät oder Kartusche für mindestens zwei Komponenten und einem Mischer oder Zubehörteil, wobei das Austraggerät oder die Kartusche einerseits und der Mischer oder das Zubehörteil andererseits zueinander komplementäre Mittel aufweisen, um den Mischer oder das Zubehörteil eindeutig gerichtet auf das Austraggerät oder die Kartusche aufzusetzen, **dadurch gekennzeichnet, dass** als Ausrichtmittel vereinzelte, zylindrische und voneinander beabstandete Auslässe (13, 14) mit voneinander verschiedenen Querschnittsflächen am Austraggerät oder an der Kartusche und korrespondierende vereinzelte, zylindrische und voneinander beabstandete Einlässe (6, 7) oder Stopfen (22, 23) am Mischer (1) oder am Zubehör (21) dienen und dass der Mischer (1) und/oder das Zubehör (21) mittels einer Überwurfmutter (18) mit Gewinde (19) am Austraggerät oder an der Kartusche befestigbar ist.

2. Anordnung nach Anspruch 1, **dadurch gekennzeichnet, dass** sie weitere Codiermittel (8, 9; 16, 17) aufweist.

3. Anordnung nach Anspruch 2, **dadurch gekennzeichnet, dass** die weiteren Codiermittel Codierleisten (8, 9) am Mischer und am Zubehörteil (21) und entsprechende Einschnitte (16, 17) am Auslassende der Kartusche oder des Austraggerätes sind.

4. Anordnung nach einem der Ansprüche 1 bis 3, **dadurch gekennzeichnet, dass** das Zubehörteil eine Verschlusskappe (21) mit zwei in die Auslässe (13, 14) der Kartusche oder des Austraggerätes passende Stopfen (22, 23).

5. Anordnung nach Anspruch 4, **dadurch gekennzeichnet, dass** die Verschlusskappe am den Stopfen entgegengesetzten Ende einen Doppelflansch (25) aufweist, der der Aufnahme einer Entfernungsscheibe (26) dient.
